(19) **Europäisches Patentamt / European Patent Office / Office européen des brevets**

(11) **EP 4 141 678 B1**

(12) **EUROPEAN PATENT SPECIFICATION**

(45) Date of publication and mention
of the grant of the patent:
**09.04.2025 Bulletin 2025/15**

(21) Application number: **20932280.9**

(22) Date of filing: **21.04.2020**

(51) International Patent Classification (IPC):
*G06F 11/22* $^{(2006.01)}$   *H04L 41/082* $^{(2022.01)}$
*H04L 41/0869* $^{(2022.01)}$   *H04L 41/08* $^{(2022.01)}$
*H04L 41/0894* $^{(2022.01)}$   *H04L 41/14* $^{(2022.01)}$

(52) Cooperative Patent Classification (CPC):
**G06F 11/2221; H04L 41/082; H04L 41/0869;
H04L 41/0889; H04L 41/0894; H04L 41/145**

(86) International application number:
**PCT/JP2020/017124**

(87) International publication number:
**WO 2021/214848 (28.10.2021 Gazette 2021/43)**

(54) **EXECUTION PROCEDURE SEARCHING DEVICE, METHOD, AND PROGRAM**

VORRICHTUNG, VERFAHREN UND PROGRAMM ZUR SUCHE NACH AUSFÜHRUNGSVORGÄNGEN

DISPOSITIF, PROCÉDÉ ET PROGRAMME DE RECHERCHE DE PROCÉDURE D'EXÉCUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023 Bulletin 2023/09**

(73) Proprietor: **Nippon Telegraph And Telephone
Corporation
Chiyoda-ku
Tokyo 100-8116 (JP)**

(72) Inventors:
- **INOUE, Takeru
  Musashino-shi, Tokyo 180-8585 (JP)**
- **TANIGUCHI, Atsushi
  Musashino-shi, Tokyo 180-8585 (JP)**
- **MANO, Toru
  Musashino-shi, Tokyo 180-8585 (JP)**

- **ANAZAWA, Kazuya
  Musashino-shi, Tokyo 180-8585 (JP)**
- **MIZUNO, Kohei
  Musashino-shi, Tokyo 180-8585 (JP)**
- **NAKAMURA, Kengo
  Musashino-shi, Tokyo 180-8585 (JP)**
- **NISHINO, Masaaki
  Musashino-shi, Tokyo 180-8585 (JP)**
- **YASUDA, Norihito
  Musashino-shi, Tokyo 180-8585 (JP)**
- **Ishihata, Masakazu
  Musashino-shi, Tokyo 180-8585 (JP)**

(74) Representative: **v. Bezold & Partner
Patentanwälte - PartG mbB
Ridlerstraße 57
80339 München (DE)**

(56) References cited:
**JP-A- 2001 075 816    JP-A- 2018 116 365
US-A1- 2005 165 919    US-B1- 8 429 255**

**Description**

Technical Field

In the present disclosure, an execution procedure for causing a system to transition to a target state is searched for. In particular, an execution procedure is searched for in the shortest time possible while using an actual system that takes time to perform execution and a pseudo-environment that is fast but not completely accurate. A system described in the present disclosure is constituted by a network device such as a router, but a method is not limited to a network device.

Background Art

In artificial systems including a network, an operator executes a procedure such as a command to change settings and make a system transition to a target state. For example, a network operator may execute a command such as address and a route control protocol on a network device such as a router, and updates settings. The router generates a routing table according to settings and transfers a packet. When the settings contain an error, the packet does not reach the destination according to an operational policy, and a failure occurs. When a failure occurs, a network operator identifies the router that is the cause and executes a restoration command to update the settings (performs a transition to a target state where no failure occurs).

In recent years, many studies have been carried out on automatic restoration from a failure. Simply, a method of searching for a command sequence to realize a target state while attempting various commands in an actual system is conceivable. Although this method is accurate because an actual system is used, it takes time to actually execute the system. For example, in the case of a network, a waiting time of several tens of seconds is required for route convergence.

On the other hand, as disclosed in NPL 1, a method using a pseudo-environment (simulator) in which a system is simply modeled has also been studied. This method can be executed in a shorter period of time than in an actual system, but no errors associated with modeling are avoided. Even a command sequence that has realized a target state on a model may not realize a target state in an actual system. In contrast, a command sequence for making an actual system transition to a target state may not reach a target state on a model.

In this context, PL 1 discloses an article of manufacture embodied in a computer-readable medium for use in a processing system for modeling configurations of a wireless local area network. The article of manufacture includes a characteristic and configurations receiving logic for causing the processing system to determine a set of original characteristics and configurations of the wireless local area network. As well, a simulation logic for causing the processing system to simulate an outcome based upon a set of configurations in accordance with a goal. In embodiments, the goal may be user defined or based upon historical data. Further, a configuration creation logic for causing the processing system to create a set of new configurations based upon the outcome and a management logic for causing the processing system to apply the set of new configurations to the wireless local area network are provided.

Citation List

Non-Patent Literature

NPL 1: A. Gember-Jacobson, A. Akella, R. Mahajan, and H. H. Liu, "Automatically repairing network control planes using an abstract representation," in Proceedings of the 26th Symposium on Operating Systems Principles, ser. SOSP '17. New York, NY, USA: ACM, 2017, pp. 359-373. (http://doi.acm.org/10.1145/3132747.3132753)
NPL 2: Batfish, https://www.batfish.org

Patent Literature

PL 1: US 2005/165919 A1

Summary of the Invention

Technical Problem

An object of the present disclosure is to search for a command sequence, while preventing overlooking as much as possible, in a shorter period of time than that of searching using only an actual system.

Means for Solving the Problem

The present disclosure aims to shorten a period of time required to obtain a candidate command sequence by using an actual network and a simulator together.

A device according to the present disclosure is an execution procedure searching device according to claim 1.

A method according to the present disclosure is an execution procedure searching method according to claim 2.

A program according to the present disclosure is a program for causing a computer to implement functions included in the execution procedure searching device according to the present disclosure, and is a program for causing the computer to execute steps included in the execution procedure searching method according to the present disclosure.

Effects of the Invention

According to the present disclosure, it is possible to search for a command sequence, while preventing overlooking as much as possible, in a shorter period of time than that of searching using only an actual system is used.

Brief Description of Drawings

Fig. 1 illustrates an example of an operational policy.
Fig. 2 illustrates an example of a network configuration.
Fig. 3 illustrates an example of a reachability graph.
Fig. 4 illustrates an example of the display of a reachable range using a reachability graph.
Fig. 5 is a setting update command sequence in the network settings method.
Fig. 6 is a system configuration diagram illustrating an example of the present disclosure.
Fig. 7 illustrates an example of a search tree of an actual network.
Fig. 8 illustrates an example of a search tree of a simulator.
Fig. 9 is an example of a flowchart of a control unit where Formula (1) is satisfied.
Fig. 10 is an example of a flowchart of a control unit where Formula (1) is not satisfied.

Description of Embodiments

Hereinafter, embodiments of the present disclosure will be described in detail with reference to the drawings. Note that the present disclosure is not limited to the embodiments described below. These embodiments are just illustrative examples, and the present disclosure can be implemented in forms in which various modifications and improvements are added on the basis of knowledge of those skilled in the art. Note that constituent elements with the same reference signs in the specification and the drawings are assumed to be the same constituent elements.

Network Settings Method

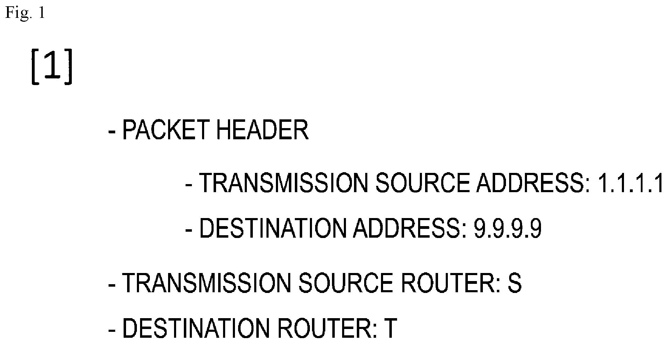

An operational policy to be satisfied by a network will be defined. The operational policy is defined by a set of three, that is, a packet header, a transmission source router, and a destination router. In the packet header, information of a higher layer, such as a port number, may be defined in addition to a transmission source address and a destination address. For example, in Fig. 1, a transmission source address of a packet header is 1.1.1.1, a reception address is 9.9.9.9, a transmission source router is S, and a destination router is T. In the proposed technology, the settings of a router are changed to satisfy an operational policy.

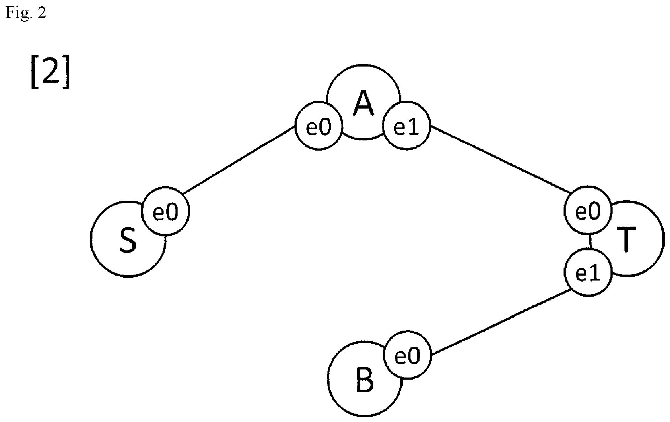

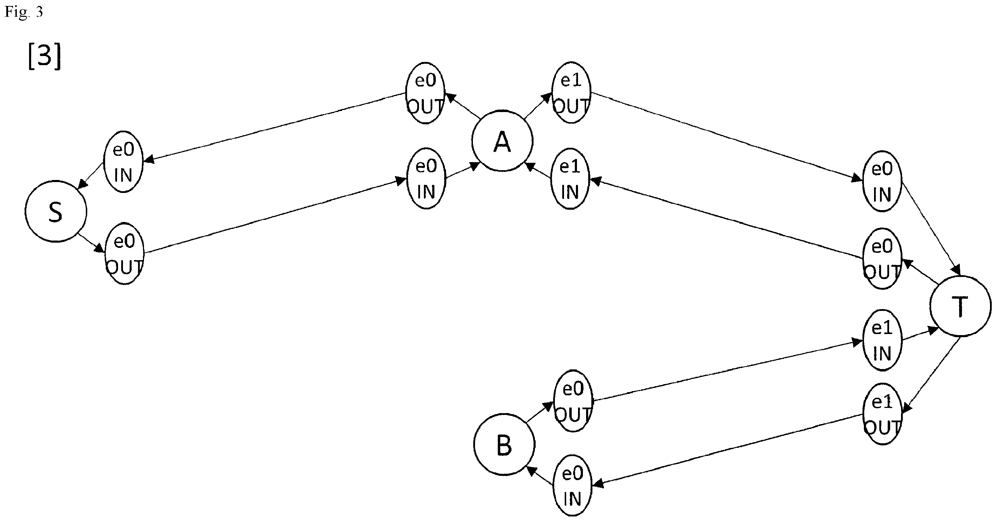

Next, a reachability graph will be defined. This is a directed graph used to evaluate the reachability of a packet. Vertices consist of routers and interfaces. However, the interfaces are sorted into inputs and outputs, and are prepared as pairs. An edge is set between the interfaces that are connected or between a router and an interface. When the network in Fig. 2 is expressed by a reachability graph, Fig. 3 is obtained. In the drawing, S, T, A, and B are routers, and e0 and e1 are interfaces.

In the present disclosure, a method of evaluating a reachable range is not limited. A packet may be transmitted from a router of an actual network or may be simulatively evaluated by a simulator. Note that the present disclosure is based on the advent of a high speed simulator such as Batfish (NPL 2). The high speed simulator is technically referred to as a control-plane verifier, and capable of evaluating reachability between designated interfaces using a function reachability. Because the high speed simulator can evaluate a reachability at the time of updating settings in a short period of time without waiting for convergence of a route control protocol, approaches of attempting various settings as in the proposed technology are practical.

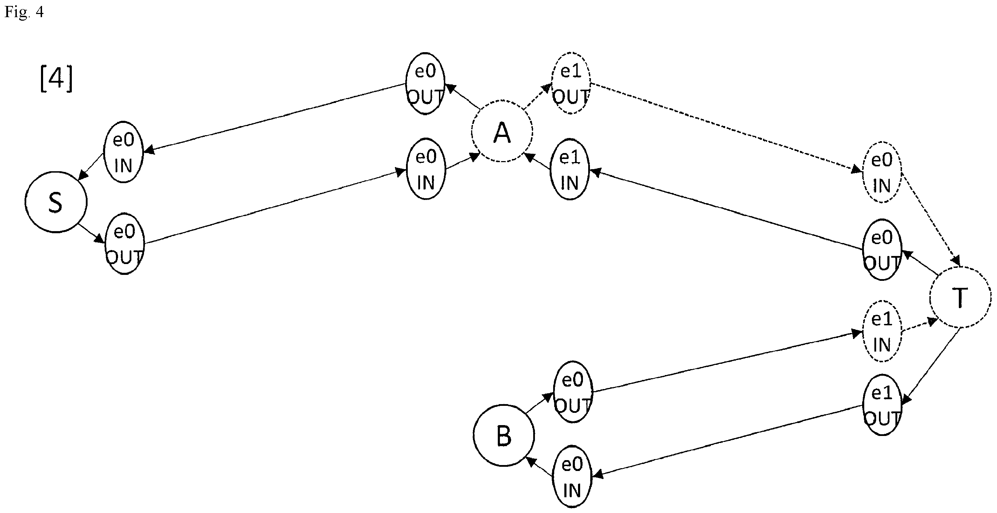

Fig. 4 illustrates an example of the display of a reachable range on a reachability graph. A dashed line indicates a range in which a packet reaches a destination router when the packet and the destination router are given in accordance with a policy in certain router settings. In this example, the packet transmitted from a router A reaches a router T, but neither the packet transmitted from a router S nor B reaches the router T. The packet is also transmitted from the other routers even when a true transmission source is the router S, and a portion that causes this is identified by clarifying a reachable range.

Inputs of a network settings method are as follows.

- Topology (a router, an interface, and a connection relationship between interfaces)
- Settings of each router
- Operational policy

In the network settings method, a reachable range of a packet described in an operational policy is evaluated in accordance with a topology and router settings, and a command sequence necessary for setting update is output in the state of inconsistency with the policy. That is, an output in the network settings method is as follows.

- Settings update command sequence

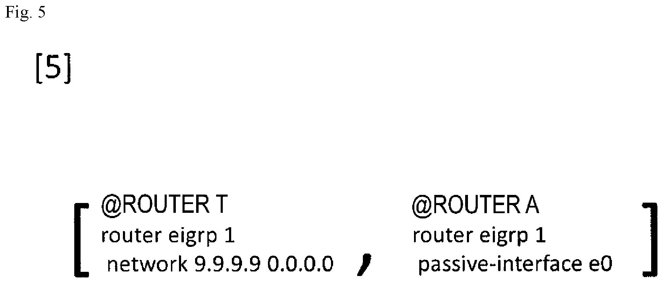

Note that a setting update command is a pair constituted by a router that executes the command and the command itself (Fig. 5). In addition, the commands in the present disclosure include any commands related to the reachability of a packet. Specifically, the commands are setting commands related to an interface address, a route control protocol, and an access control list.

A network setting method according to the present disclosure, which is a method for searching for a command sequence to be set for a plurality of network devices, includes performing a first step for determining whether a network having executed a temporary update command sequence satisfies a predetermined operational policy, and includes executing, until satisfaction for the predetermined operational policy, processing for: performing a second step for determining whether a reachable range of a packet expands with addition of one new candidate command of one or more new candidate commands to the temporary update command sequence on condition that the predetermined operational policy is not satisfied; adding the new candidate command to the temporary update command sequence on condition that the reachable range expands with the addition of the new candidate command, or deleting a command at the end of the temporary update command sequence on condition that the reachable range does not expand with addition of any one of the new commands; and then returning to the first step.

Preparation

In the present disclosure, the proposed technology will be described based on a network settings method. In the network settings method, a command is executed to update the settings of a router, and a reachable range of a packet is expanded. When a reachable range is expanded by some commands and an operational policy is satisfied, the command sequence is output as a response. In the network settings method, a state where a command sequence serving as a response is searched for can be represented as a search tree. Note that, in a network device setting method, an environment in which commands are attempted may be an actual network or may be a simulator. In the present disclosure, an actual network and a simulator are used together for an environment in which commands are attempted.

As described in the problem, system states (packet reachable ranges) at the time of inputting a command may not match in an actual network and a simulator. When reachable ranges drawn at nodes of a search tree are different, commands to be executed thereafter may also be different, and thus there is a possibility that final search trees and setting update command sequences will also be different.

The only way to confirm the correctness of a command sequence is to attempt the command sequence on an actual network, but it is attempted to reduce a period of time therefor by using a simulator in combination therewith. In addition, overlooking of correct command sequences is avoided as much as possible.

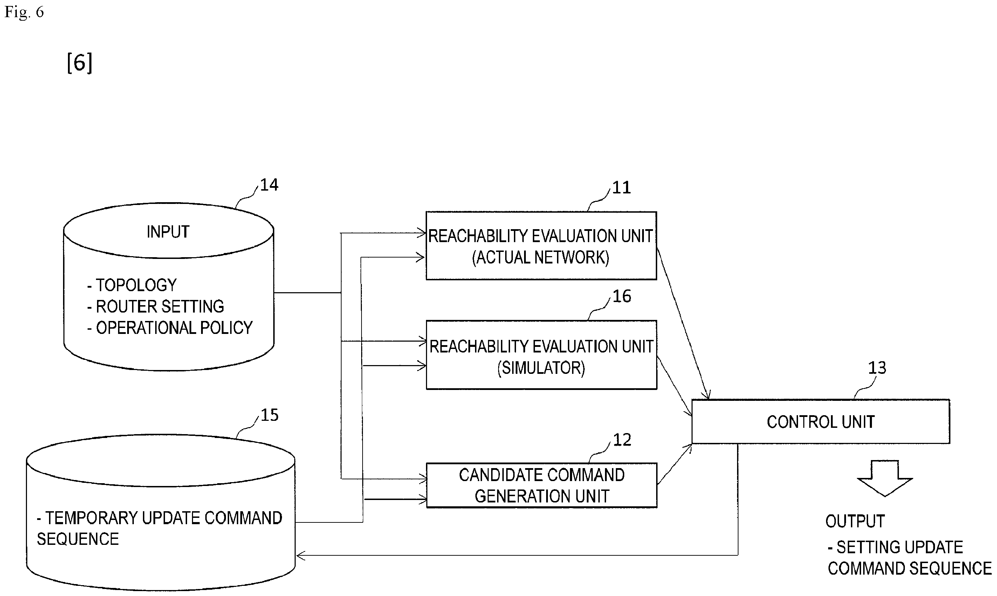

Fig. 6 illustrates an example of a system configuration of the present disclosure. The execution procedure searching device of the present disclosure includes an actual network reachability evaluation unit 11, a simulator reachability evaluation unit 16, a candidate command generation unit 12, and a control unit 13. The device according to the present disclosure can be implemented using a computer and a program, and the program can be recorded in a recording medium or provided through a network.

The execution procedure searching device according to the present disclosure is communicatively connected to an actual network and a simulator which are not illustrated in the drawings.

The candidate command generation unit 12 generates candidate commands. The commands are commands that can be used in a router constituting an actual network. A command used in the simulator may be the same command as that in the actual network, but may be any command equivalent to a command in the actual network.

The control unit 13 causes the actual network and the simulator to execute the command generated by the candidate command generation unit 12.

The actual network reachability evaluation unit 11 determines a reachable range of a packet in executing a command in the actual network.

The simulator reachability evaluation unit 16 determines a reachable range of a packet in executing a command in the simulator.

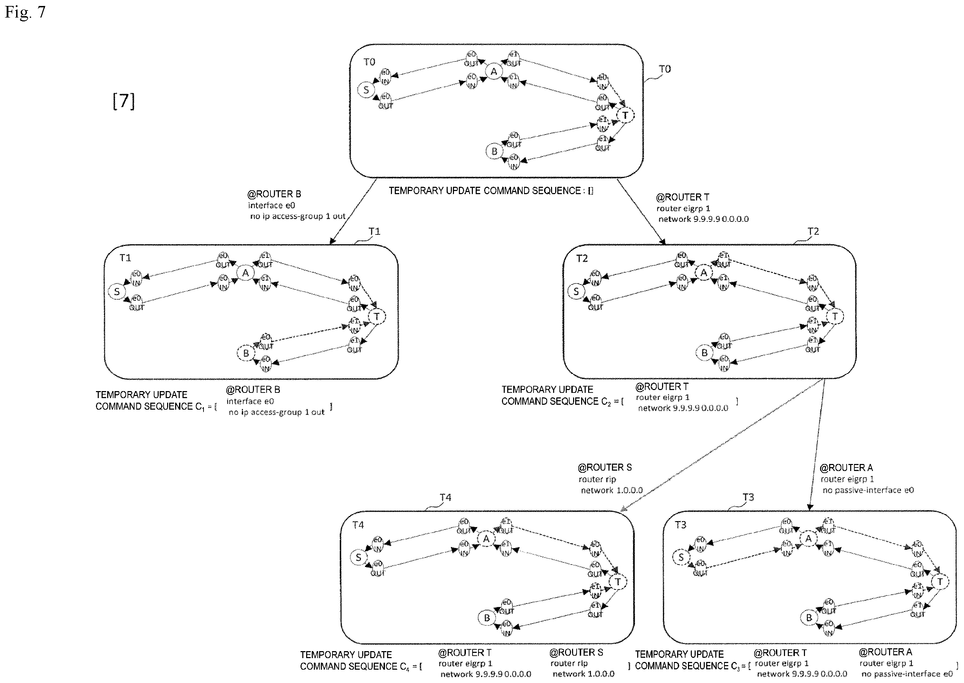

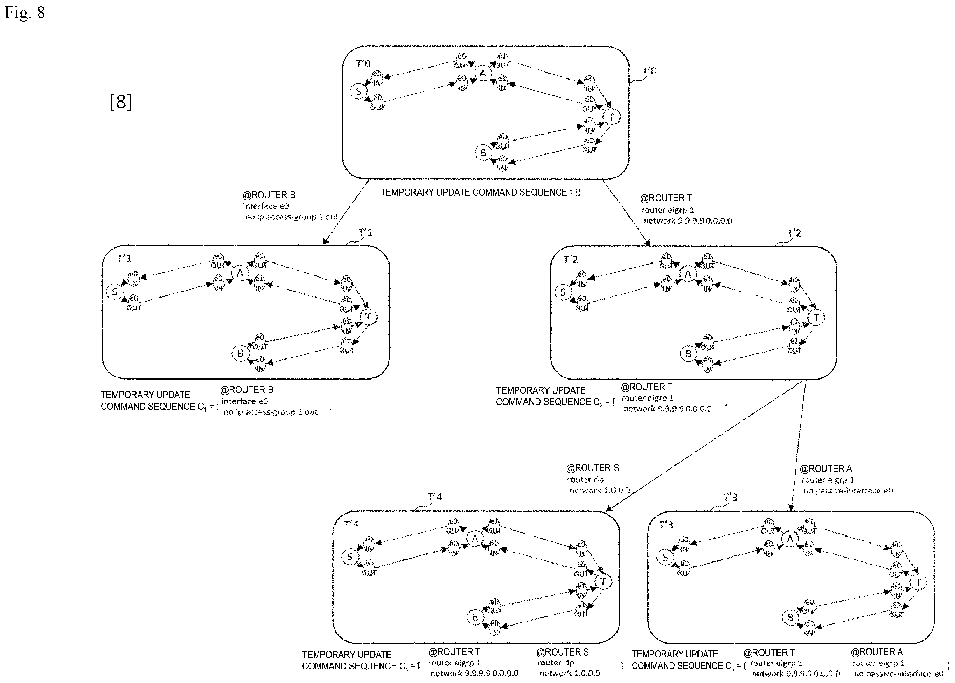

Fig. 7 is a search tree of searching for a setting update command sequence only in an actual network. Fig. 8 is a search tree of searching for a setting update command sequence only in a simulator. Nodes of a simulator search tree are primed and referred to as T'0, T'1, and the like.

A function Goal (C) for determining whether a certain command sequence C satisfies a policy is defined. According to this function, true is returned as in the following expression when C satisfies the policy.

[Math. 11]

$$\top \quad (1\,1)$$

False is returned as in the following expression when C does not satisfy the policy.

[Math. 12]

$$\bot \quad (1\,2)$$

Additionally, a function of performing determination in an actual network is defined as $\mathrm{Goal}_r$, and a function of performing determination in a simulator is defined as $\mathrm{Goal}_s$.

An example in Fig. 7 will be described. Because Fig. 7 illustrates an actual network, $\mathrm{Goal}_r$ is used. A reachable range in the initial settings is shown at a node T0 in Fig. 7. No packet from any router reach the destination except for a router T that works as a destination.

Next, the candidate command generation unit 12 generates some candidate commands. In this specification, this generation method is not limited. The candidate command generation unit 12 may select a candidate command from a predetermined command set, or may select a command suitable for the current settings and a reachable range by machine learning. While NPL 1 limits a target command type to route information exchange, the proposed technology can handle any command.

Subsequently, the control unit 13 causes the actual network to execute a command (@router B...) that is given to a branch from the root T0 to the node T1. This command executes "interface e0; no ip access-group 1 out" in the router B. The actual network reachability evaluation unit 11 determines that a packet from the router B reaches the router T.

Because the router S which is a transmission source is not included in the reachable range at the contact point T1, the policy is not satisfied. Thus, when the control unit 13 gives a command sequence $C_1$ ("interface e0; no ip access-group 1 out" is executed in the router B) with respect to the contact point T1 to $\mathrm{Goal}_r$, the actual network reachability evaluation unit 11 returns false.

[Math. 13]

$$\mathrm{Goal}_r(C_1) = \bot \quad (1\,3)$$

Subsequently, the control unit 13 executes a command (@router T...) which is given to a branch from the root T0 to the node T2. This command executes "router eigrp 1;network 9.9.9.9 0.0.0.0" in the router T. The actual network reachability evaluation unit 11 determines that a packet from the router A reaches the router T. Because the router S which is a transmission source is not included in the reachable range at a contact point T2, the policy is not satisfied. Thus, the actual network reachability evaluation unit 11 also returns false for a command sequence $C_2$ (router T...) with respect to the contact point T2.

[Math. 14]

$$\mathrm{Goal}_r(C_2) = \bot \quad (1\,4)$$

Subsequently, the control unit 13 executes a command (@router A...) which is given to a branch from the root T2 to the node T3. This command executes "router eigrp 1;no passive-interface e0" in the router A. The actual network reachability evaluation unit 11 determines that a packet from the router S reaches the destination router T. The actual network reachability evaluation unit 11 returns true only for a command sequence $C_3$ with respect to the node T3.

[Math. 15]

$$\mathrm{Goal}_r(C_3) = \top \qquad (15)$$

Here, it is assumed that the function $\mathrm{Goal}_r$ and $\mathrm{Goal}_s$ satisfy the following.
[Math. 1]

$$\forall C, \ \mathrm{Goal}_r(C) = \top \implies \mathrm{Goal}_s(C) = \top.\qquad (1)$$

This indicates that the command sequence that is true in the actual network is also true in the simulator. The converse may not be established (when the simulator is true, the actual network may be true or false). The inverse may not be established (when the actual network is false, the result in the simulator may be true or false). In other words, the simulator has false positives but no false negatives.

For example, in a simulator that does not cope with timer processing of a route control protocol, a route may be established even when a route is not established in the actual network due to an incorrect timer value. In this example,
[Math. 16]

$$\mathrm{Goal}_r(C) = \bot \qquad (16)$$

and
[Math. 17]

$$\mathrm{Goal}_s(C) = \top \qquad (17)$$

, and thus Formula (1) is satisfied.

In addition, a simulator often may not cope with some commands, where Formula (1) is satisfied when the following is defined.
[Math. 18]

$$\mathrm{Goal}_s(C) = \top \qquad (18)$$

Searching Only in Actual Network

Execution procedure searching using only the actual network (Fig. 7) will be described as a target for comparison with the proposed technology. Operations are the same as those in the network settings method, but description will be given using Goal defined in the preceding section.

The control unit 13 starts the contact point T0, which is the root in Fig. 7, and obtains the command sequence $C_1$ at the contact point T1 from the candidate command generation unit 12, but it is assumed that the following has been returned from the actual network reachability evaluation unit 11.
[Math. 19]

$$\mathrm{Goal}_r(C_1) = \bot \qquad (19)$$

It is assumed that the control unit 13 does not have a command to proceed from the contact point T1 (the reachable range can be expanded) and returns to the contact point T0.

Next, the control unit 13 proceeds to the contact point T2 to obtain the command sequence $C_2$ from the candidate command generation unit 12, but it is assumed that the following has been returned from the actual network reachability evaluation unit 11.
[Math. 20]

$$\mathrm{Goal}_r(C_2) = \bot \qquad (20)$$

The control unit 13 further proceeds to a contact point T4 to obtain a command sequence $C_4$ from the candidate command generation unit 12, but it is assumed that the following has been returned from the actual network reachability evaluation unit 11.

[Math. 21]

$$\mathrm{Goal_r(C_4)} = \bot \qquad (21)$$

The control unit 13 does not have a command to proceed from the contact point T4 and returns to the contact point T2. The control unit 13 proceeds to a contact point T3 to obtain a command sequence $C_3$ from the candidate command generation unit 12, and confirms that the policy is satisfied by the following being returned from the actual network reachability evaluation unit 11.

[Math. 22]

$$\mathrm{Goal_r(C_3)} = \top \qquad (22)$$

So far, the control unit 13 has evaluated the respective reachable ranges through five nodes including the contact point T0. When it is assumed that a period of time taken to evaluate the reachable ranges is 60 seconds, it takes $5 \times 60 = 300$ seconds.

Proposed Technology: Example where Formula (1) is Satisfied

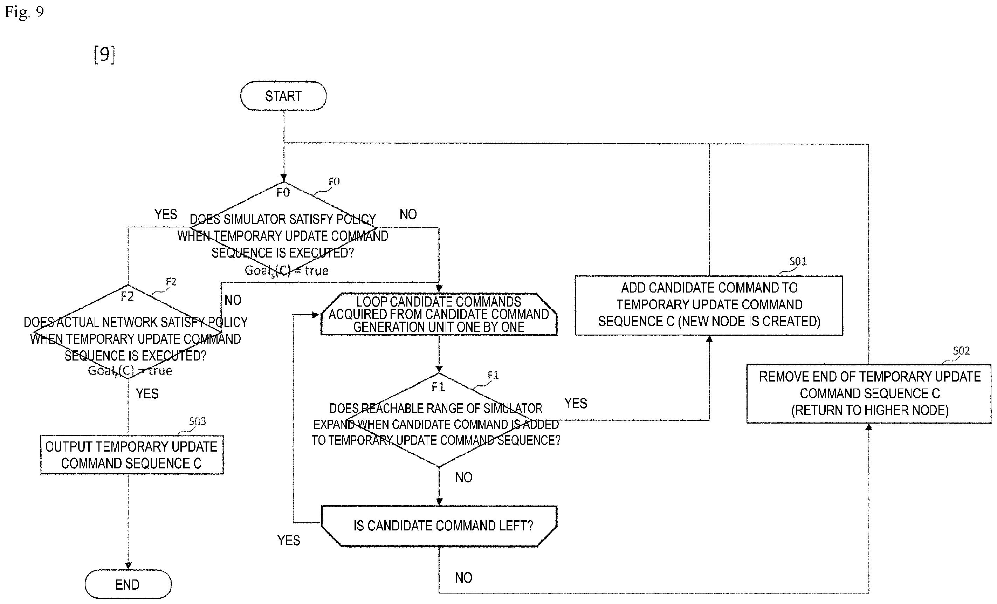

In the proposed technology, an actual network and a simulator are used together. In the present section, execution procedure searching based on the proposed technology, provided that Formula (1) is satisfied, will be described. Fig. 6 illustrates a system configuration, and Fig. 9 is a flowchart illustrating the control unit 13.

An operational policy in the actual network, topology information of the actual network, and setting information of routers constituting the actual network are input to the input unit 14 of the execution procedure searching device. For settings, a reachable range is displayed at each node, instead of showing specific contents.

The control unit 13 evaluates a reachable range for each of the candidate commands of the candidate command generation unit 12 (F1 in Fig. 9), and adds a command to a temporary update command sequence 15 when the range expands, which is the same as in the network settings method. When the reachable range expands, a new node is created in the search tree.

The control unit 13 searches for a setting update command sequence that satisfies the policy in accordance with the flowchart of Fig. 9. Starting from a contact point T'0 of the search tree of the simulator, a command $C_1$ (@router B...) which is given to a branch to a contact point T'1 is executed, and the expansion of the reachable range is confirmed (F1 in Fig. 9) to create the contact point T'1.

Specifically, the control unit 13 evaluates a reachable range of the simulator reachability evaluation unit 16 (F0 in Fig. 9), and acquires the following from the simulator reachability evaluation unit 16.

[Math. 23]

$$\mathrm{Goal_s(C_1)} = \bot \qquad (23)$$

Here, there is no executable command, and the control unit returns to the contact point T'0.

Next, the control unit 13 proceeds to a contact point T'2 to obtain a command sequence $C_2$ (@router T...), and acquires the following from the simulator reachability evaluation unit 16.

[Math. 24]

$$\mathrm{Goal_s(C_2)} = \bot \qquad (24)$$

The control unit 13 further proceeds to a contact point T'4 to obtain a command sequence $C_4$, and acquires the following that satisfies the policy from the simulator reachability evaluation unit 16.

[Math. 25]

$$\mathrm{Goal_s(C_4)} = \top \qquad (25)$$

Here, the control unit 13 proceeds to F2 in Fig. 9, and executes $C_4$ in the actual network to evaluate a reachable range. However, it can be understood that the policy is not satisfied. That is, the following is acquired from the actual network reachability evaluation unit 11.

[Math. 26]

$$\mathrm{Goal}_r(C_4) = \bot \qquad (26)$$

The control unit 13 follows the contact points T'2 and T'3, evaluates a reachable range of the command sequence $C_3$ by the simulator reachability evaluation unit 16, and finds that the policy is satisfied by acquiring the following.
[Math. 27]

$$\mathrm{Goal}_s(C_3) = \top \qquad (27)$$

Subsequently, the control unit 13 executes a command $C_3$ in the actual network and confirms that the policy is satisfied.
[Math. 28]

$$\mathrm{Goal}_r(C_3) = \top \qquad (28)$$

Because a result in F2 in Fig. 9 is "YES", a temporary update command sequence $C_3$ is output, and the processing ends.

In the search tree of the simulator, a reachable range is evaluated in each of five nodes including the contact point T'0. On the other hand, in the actual network, a reachable range is only evaluated in two nodes of the contact points T4 and T3. When a period of time for the evaluation of a reachable range in the simulator is set to 1 second, the searching can be completed in a total of $5 \times 1 + 2 \times 60 = 125$ seconds, which is shorter than a time, namely 300 seconds, taken by searching using only the actual network.

Note that, as long as Formula (1) is satisfied, a command sequence that is true in the actual network is also true in the simulator, and thus a command sequence satisfying the policy will not be overlooked.

Proposed Technology: Example where Formula (1) is not Satisfied In the present section, execution procedure searching where Formula (1) is not satisfied will be described. In this example, even when it is evaluated that a policy is not satisfied in the simulator, there is a possibility that the policy will be satisfied in the actual network. Consequently, in evaluating a reachable range in the simulator, the reachable range is compared with a reachable range in the actual network with a fixed probability. When the range in the actual network is wider, the searching in the simulator is stopped and switched to searching in the actual network.

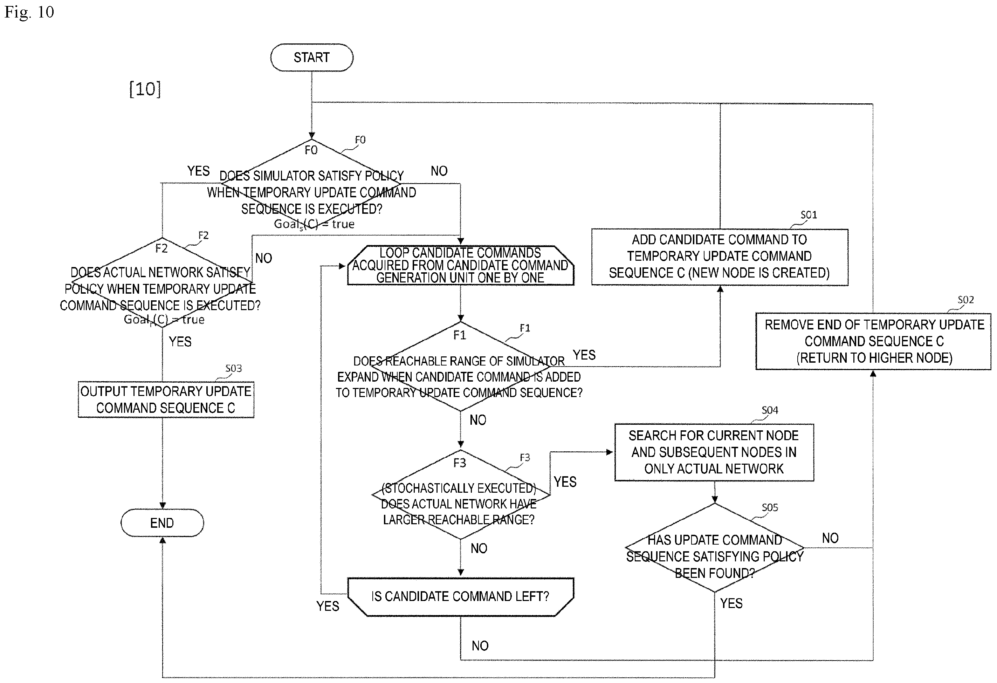

A system configuration is the same as that in Fig. 6 in the previous section. A flowchart of the control unit 13 is illustrated in Fig. 10. The searching proceeds in the same manner as in the previous section, and it is assumed that the searching has proceeded to the evaluation of a reachable range of a command $C_2$ given to an edge from the contact point T'0 to the contact point T'2. In step F1 in Fig. 10, the reachable range of the command $C_2$ is evaluated using the simulator, but it is assumed that the reachable range has not expanded this time (this is the same as the reachable range in the initial settings).

Then, the processing proceeds to step F3 in Fig. 10, and it is stochastically determined whether to perform evaluation in the actual network. For example, when the probability is 10%, a method of generating random numbers of 0 to 1 and performing evaluation when the random number is 0.1 or less is conceivable. It is assumed that the random number is 0.1 and a reachable range is evaluated in the actual network. Then, as at the contact point T1 in Fig. 7, it can be understood that a reachable range expands in the actual network. That is, the simulator cannot correctly evaluate the command $C_2$, and hereinafter, the node T1 and the subsequent nodes are switched to searching in the actual network.

Specifically, a network settings method is only required to be executed on the actual network by including a temporary update command sequence at that point in time ($C_2$ this time) in the initial settings of the router. Finally, the following is found ("YES" in S05), and a command $C_3$ is output to terminate the processing (S03).
[Math. 29]

$$\mathrm{Goal}_r(C_3) = \top \qquad (29)$$

In this manner, although it is stochastic, a command sequence that satisfies the policy can be searched for while avoiding overlooking.

As described above, the present disclosure provides a method for searching for a command sequence to be set for a plurality of devices constituting a system, the method including performing a first step F0 for determining whether a simulator of the system having executed a temporary update command sequence satisfies a predetermined policy, and including executing, until satisfaction for the predetermined policy of the simulator, processing for:

performing a second step F1 for determining whether the simulator approaches a state where the predetermined policy is satisfied, with addition of one new candidate command of one or more new candidate commands to the temporary update command sequence on condition that the simulator does not satisfy the predetermined policy; adding the new candidate command to the temporary update command sequence on condition that the simulator approaches the state where the predetermined policy is satisfied, with the addition of the new candidate command (S01), or deleting a command at the end of the temporary update command sequence (S02) on condition that the simulator does not approach the state where the predetermined policy is satisfied, with addition of any one of the new commands; and then

returning to the first step F0, and including:

performing a third step F2 for determining whether the actual system having executed the temporary update command sequence satisfies the predetermined policy on condition that the simulator satisfies the predetermined policy ("YES" in F0); and

executing processing for returning to the second step F1 until satisfaction for the predetermined policy of the actual system ("YES" in F2), on condition that the actual system does not satisfy the predetermined policy.

Effects of Present Disclosure

An execution procedure (setting update command sequence) is searched for, while preventing overlooking as much as possible, in a shorter period of time than that of searching using only an actual system. While examples of an actual network constituted by a plurality of routers and a simulator thereof have been described in the above-described embodiments, the present disclosure can be applied to any system constituted by a plurality of devices and a simulator thereof. Here, the plurality of devices may be a plurality of virtual devices constructed on one physical resource.

Point of the Present Disclosure

When there is an evaluation environment in which a trade-off occurs between accuracy and an execution speed as in an actual network and a simulator, and the simulator has no false negatives, the simulator proceeds with searching first, and the actual network performs a final check, whereby it is possible to reduce a searching time while avoiding overlooking. Even when the simulator has false negatives, evaluation is stochastically performed in the actual network, and thus it is possible to reduce a searching time while avoiding overlooking.

Industrial Applicability

The present disclosure can be applied in the information communication industry.

Reference Signs List

11 Actual network reachability evaluation unit
12 Candidate command generation unit
13 Control unit
14 Input unit
15 Temporary update command sequence
16 Simulator reachability evaluation unit

**Claims**

1. An execution procedure searching device that searches for a command sequence to be set for a plurality of devices constituting a system, wherein the execution procedure searching device is configured to:

perform a first step for determining whether a simulator of the system having executed a temporary update command sequence (15) satisfies a predetermined policy, wherein the predetermined policy is defined by a set of three, that is, a packet header, a transmission source router, and a destination router, and wherein the predetermined policy is satisfied when a packet from the transmission source router reaches the destination router, and

execute, until satisfaction for the predetermined policy of the simulator, processing for:

performing a second step for determining whether the simulator approaches a state where the predetermined policy is satisfied, with addition of one new candidate command of one or more new candidate commands to the temporary update command sequence (15) on condition that the simulator does not satisfy the predetermined policy, wherein the candidate commands are related to the reachability of the packet; adding the new candidate command to the temporary update command sequence (15) on condition that the simulator approaches the state where the predetermined policy is satisfied, with the addition of the new candidate command, or

deleting a command at the end of the temporary update command sequence (15) on condition that the simulator does not approach the state where the predetermined policy is satisfied, with addition of any one of the new candidate commands; and then

returning to the first step, and

perform a third step for determining whether the actual system having executed the temporary update command sequence (15) satisfies the predetermined policy on condition that the simulator satisfies the predetermined policy, and

execute processing for returning to the second step until satisfaction for the predetermined policy of the actual system, on condition that the actual system does not satisfy the predetermined policy.

2. An execution procedure searching method executed by an execution procedure searching device that searches for a command sequence to be set for a plurality of devices constituting a system, the execution procedure searching method comprising:

performing, by the execution procedure searching device, a first step for determining whether a simulator of the system having executed a temporary update command sequence (15) satisfies a predetermined policy, wherein the predetermined policy is defined by a set of three, that is, a packet header, a transmission source router, and a destination router, and wherein the predetermined policy is satisfied when a packet from the transmission source router reaches the destination router, and

executing, until satisfaction for the predetermined policy of the simulator, processing for:

performing, by the execution procedure searching device, a second step for determining whether the simulator approaches a state where the predetermined policy is satisfied, with addition of one new candidate command of one or more new candidate commands to the temporary update command sequence (15) on condition that the simulator does not satisfy the predetermined policy, wherein the candidate commands are related to the reachability of the packet;

adding, by the execution procedure searching device, the new candidate command to the temporary update command sequence (15) on condition that the simulator approaches the state where the predetermined policy is satisfied, with the addition of the new candidate command, or

deleting, by the execution procedure searching device, a command at the end of the temporary update command sequence (15) on condition that the simulator does not approach the state where the predetermined policy is satisfied, with addition of any one of the new candidate commands; and then

returning, by the execution procedure searching device, to the first step, and

performing, by the execution procedure searching device, a third step for determining whether the actual system having executed the temporary update command sequence (15) satisfies the predetermined policy on condition that the simulator satisfies the predetermined policy; and

executing, by the execution procedure searching device, processing for returning to the second step until satisfaction for the predetermined policy of the actual system, on condition that the actual system does not satisfy the predetermined policy.

3. An execution procedure searching program for causing a computer to implement the functions included in the execution procedure searching device according to claim 1.

**Patentansprüche**

1. Ausführungsprozedursuchvorrichtung, die nach einer Befehlssequenz sucht, die für eine Vielzahl von Vorrichtungen, die ein System bilden, einzustellen ist, wobei die Ausführungsprozedursuchvorrichtung dazu konfiguriert ist:

# EP 4 141 678 B1

einen ersten Schritt durchzuführen, zur Ermittlung, ob ein Simulator des Systems, der eine temporäre Updatebefehlssequenz (15) ausgeführt hat, eine vorbestimmte Richtlinie erfüllt, wobei die vorbestimmte Richtlinie durch drei Elemente definiert ist, nämlich einen Paketheader, einen Übertragungsquellenrouter und einen Zielrouter, und wobei die vorbestimmte Richtlinie erfüllt ist, wenn ein Paket von dem Übertragungsquellenrouter den Zielrouter erreicht, und

bis zur Erfüllung der vorbestimmten Richtlinie des Simulators folgende Verarbeitung ausführt:

Durchführen eines zweiten Schritts zum Ermitteln, ob sich der Simulator mit Hinzufügen eines neuen Kandidatenbefehls von einem oder mehreren neuen Kandidatenbefehlen zu der temporären Aktualisierungsbefehlssequenz (15) einem Zustand nähert, in dem die vorbestimmte Richtlinie erfüllt ist, unter der Bedingung, dass der Simulator die vorbestimmte Richtlinie nicht erfüllt, wobei die Kandidatenbefehle sich auf die Erreichbarkeit des Pakets beziehen;

Hinzufügen des neuen Kandidatenbefehls zu der temporären Aktualisierungsbefehlssequenz (15), falls sich der Simulator mit dem Hinzufügen des neuen Kandidatenbefehls dem Zustand, in dem die vorbestimmte Richtlinie erfüllt ist, nähert, oder

Löschen eines Befehls an dem Ende der temporären Aktualisierungsbefehlssequenz (15), falls sich der Simulator mit Hinzufügen eines der neuen Kandidatenbefehle dem Zustand, in dem die vorbestimmte Richtlinie erfüllt ist, nicht nähert; und dann

Zurückkehren zum ersten Schritt; und

Durchführen eines dritten Schritts zum Ermitteln, ob das tatsächliche System, das die temporäre Aktualisierungsbefehlssequenz (15) ausgeführt hat, die vorbestimmte Richtlinie erfüllt, falls der Simulator die vorbestimmte Richtlinie erfüllt, und

Ausführen einer Verarbeitung, um zum zweiten Schritt zurückzukehren, bis das tatsächliche System die vorgegebene Richtlinie erfüllt, falls das tatsächliche System die vorgegebene Richtlinie nicht erfüllt.

2. Ausführungsprozedursuchverfahren, das von einer Ausführungsprozedursuchvorrichtung ausgeführt wird, die nach einer Befehlssequenz sucht, die für eine Vielzahl von Vorrichtungen, die ein System bilden, eingestellt werden soll, wobei das Ausführungsprozedursuchverfahren aufweist:

Durchführen, mittels der Ausführungsprozedursuchvorrichtung, eines ersten Schritts zur Ermittlung, ob ein Simulator des Systems, der eine temporäre Updatebefehlssequenz (15) ausgeführt hat, eine vorbestimmte Richtlinie erfüllt, wobei die vorbestimmte Richtlinie durch drei Elemente definiert ist, nämlich einen Paketheader, einen Übertragungsquellenrouter und einen Zielrouter, und wobei die vorbestimmte Richtlinie erfüllt ist, wenn ein Paket von dem Übertragungsquellenrouter den Zielrouter erreicht, und

Ausführen, bis zur Erfüllung der vorbestimmten Richtlinie des Simulators, folgender Verarbeitung:

Durchführen, mittels der Ausführungsprozedursuchvorrichtung, eines zweiten Schritts zum Ermitteln, ob sich der Simulator mit Hinzufügen eines neuen Kandidatenbefehls von einem oder mehreren neuen Kandidatenbefehlen zu der temporären Aktualisierungsbefehlssequenz (15) einem Zustand nähert, in dem die vorbestimmte Richtlinie erfüllt ist, unter der Bedingung, dass der Simulator die vorbestimmte Richtlinie nicht erfüllt, wobei die Kandidatenbefehle sich auf die Erreichbarkeit des Pakets beziehen;

Hinzufügen, mittels der Ausführungsprozedursuchvorrichtung, des neuen Kandidatenbefehls zu der temporären Aktualisierungsbefehlssequenz (15), falls sich der Simulator mit dem Hinzufügen des neuen Kandidatenbefehls dem Zustand, in dem die vorbestimmte Richtlinie erfüllt ist, nähert, oder

Löschen, mittels der Ausführungsprozedursuchvorrichtung, eines Befehls an dem Ende der temporären Aktualisierungsbefehlssequenz (15), falls sich der Simulator mit Hinzufügen eines der neuen Kandidatenbefehle dem Zustand, in dem die vorbestimmte Richtlinie erfüllt ist, nicht nähert; und dann

Zurückkehren, mittels der Ausführungsprozedursuchvorrichtung, zum ersten Schritt; und

Durchführen, mittels der Ausführungsprozedursuchvorrichtung, eines dritten Schritts zum Ermitteln, ob das tatsächliche System, das die temporäre Aktualisierungsbefehlssequenz (15) ausgeführt hat, die vorbestimmte Richtlinie erfüllt, falls der Simulator die vorbestimmte Richtlinie erfüllt, und

Ausführen, mittels der Ausführungsprozedursuchvorrichtung, einer Verarbeitung, um zum zweiten Schritt zurückzukehren, bis das tatsächliche System die vorgegebene Richtlinie erfüllt, falls das tatsächliche System die vorgegebene Richtlinie nicht erfüllt.

3. Ausführungsprozedursuchprogramm, das einen Computer veranlasst, die in der Ausführungsprozedursuchvorrichtung nach Anspruch 1 enthaltenen Funktionen zu implementieren.

**Revendications**

1. Dispositif de recherche de procédure d'exécution qui recherche une séquence de commandes destinée à être établie pour une pluralité de dispositifs constituant un système, dans lequel le dispositif de recherche de procédure d'exécution est configuré pour :

réaliser une première étape pour déterminer si un simulateur du système ayant exécuté une séquence de commandes de mise à jour temporaire (15) respecte une politique prédéterminée, dans lequel la politique prédéterminée est définie par un ensemble de trois, à savoir, un en-tête de paquet, un routeur de source de transmission, et un routeur de destination, et dans lequel la politique prédéterminée est respectée lorsqu'un paquet provenant du routeur de source de transmission atteint le routeur de destination, et

exécuter, jusqu'au respect de la politique prédéterminée du simulateur, un traitement pour :

la réalisation d'une deuxième étape pour déterminer si le simulateur se rapproche d'un état où la politique prédéterminée est respectée, avec l'addition d'une nouvelle commande candidate d'une ou de plusieurs nouvelles commandes candidates à la séquence de commandes de mise à jour temporaire (15) à condition que le simulateur ne respecte pas la politique prédéterminée, dans lequel les commandes candidates sont connexes à la capacité d'atteinte du paquet ;

l'ajout de la nouvelle commande candidate à la séquence de commandes de mise à jour temporaire (15) à condition que le simulateur se rapproche de l'état où la politique prédéterminée est respectée, avec l'ajout de la nouvelle commande candidate, ou

la suppression d'une commande à la fin de la séquence de commandes de mise à jour temporaire (15) à condition que le simulateur ne se rapproche pas de l'état où la politique prédéterminée est respectée, avec l'ajout d'une quelconque des nouvelles commandes candidates ; et puis le retour à la première étape, et

réaliser une troisième étape pour déterminer si le système en tant que tel ayant exécuté la séquence de commandes de mise à jour temporaire (15) respecte la politique prédéterminée à condition que le simulateur respecte la politique prédéterminée, et

exécuter un traitement pour le retour à la deuxième étape jusqu'au respect de la politique prédéterminée du système en tant que tel, à condition que le système en tant que tel ne respecte pas la politique prédéterminée.

2. Procédé de recherche de procédure d'exécution exécuté par un dispositif de recherche de procédure d'exécution qui recherche une séquence de commandes destinée à être établie pour une pluralité de dispositifs constituant un système, le procédé de recherche de procédure d'exécution comprenant :

la réalisation, par le dispositif de recherche de procédure d'exécution, d'une première étape pour déterminer si un simulateur du système ayant exécuté une séquence de commandes de mise à jour temporaire (15) respecte une politique prédéterminée, dans lequel la politique prédéterminée est définie par un ensemble de trois, à savoir, un en-tête de paquet, un routeur de source de transmission, et un routeur de destination, et dans lequel la politique prédéterminée est respectée lorsqu'un paquet provenant du routeur de source de transmission atteint le routeur de destination, et

l'exécution, jusqu'au respect de la politique prédéterminée du simulateur, d'un traitement pour :

la réalisation, par le dispositif de recherche de procédure d'exécution, d'une deuxième étape pour déterminer si le simulateur se rapproche d'un état où la politique prédéterminée est respectée, avec l'addition d'une nouvelle commande candidate d'une ou de plusieurs nouvelles commandes candidates à la séquence de commandes de mise à jour temporaire (15) à condition que le simulateur ne respecte pas la politique prédéterminée, dans lequel les commandes candidates sont connexes à la capacité d'atteinte du paquet ;

l'ajout, par le dispositif de recherche de procédure d'exécution, de la nouvelle commande candidate à la séquence de commandes de mise à jour temporaire (15) à condition que le simulateur se rapproche de l'état où la politique prédéterminée est respectée, avec l'ajout de la nouvelle commande candidate, ou

la suppression, par le dispositif de recherche de procédure d'exécution, d'une commande à la fin de la séquence de commandes de mise à jour temporaire (15) à condition que le simulateur ne se rapproche pas de l'état où la politique prédéterminée est respectée, avec l'ajout d'une quelconque des nouvelles commandes candidates ; et puis

le retour, par le dispositif de recherche de procédure d'exécution, à la première étape, et la réalisation, par le dispositif de recherche de procédure d'exécution, d'une troisième étape pour déterminer si le système en tant que tel ayant exécuté la séquence de commandes de mise à jour temporaire (15) respecte la politique prédéterminée à condition que le simulateur respecte la politique prédéterminée ; et

l'exécution, par le dispositif de recherche de procédure d'exécution, d'un traitement pour le retour à la deuxième étape jusqu'au respect de la politique prédéterminée du système en tant que tel, à condition que le système en tant que tel ne respecte pas la politique prédéterminée.

3. Programme de recherche de procédure d'exécution pour amener un ordinateur à mettre en œuvre les fonctions incluses dans le dispositif de recherche de procédure d'exécution selon la revendication 1.

Fig. 1

[1]

- PACKET HEADER

- TRANSMISSION SOURCE ADDRESS: 1.1.1.1

- DESTINATION ADDRESS: 9.9.9.9

- TRANSMISSION SOURCE ROUTER: S

- DESTINATION ROUTER: T

Fig. 2

[2]

Fig. 3

[3]

Fig. 4

[4]

Fig. 5

[5]

$$\left[\begin{array}{cc} \text{@ROUTER T} & \text{@ROUTER A} \\ \text{router eigrp 1} & \text{router eigrp 1} \\ \text{network 9.9.9.9 0.0.0.0} \quad \big/ & \text{passive-interface e0} \end{array}\right]$$

Fig. 6

[6]

INPUT (14)
- TOPOLOGY
- ROUTER SETTING
- OPERATIONAL POLICY

REACHABILITY EVALUATION UNIT (ACTUAL NETWORK) (11)

REACHABILITY EVALUATION UNIT (SIMULATOR) (16)

CONTROL UNIT (13)

CANDIDATE COMMAND GENERATION UNIT (12)

- TEMPORARY UPDATE COMMAND SEQUENCE (15)

OUTPUT
- SETTING UPDATE COMMAND SEQUENCE

Fig. 7

[7]

Fig. 8

[8]

Fig. 9

[9]

START

F0 / F0
DOES SIMULATOR SATISFY POLICY WHEN TEMPORARY UPDATE COMMAND SEQUENCE IS EXECUTED?
$Goal_s(C) = true$
YES / NO

F2 / F2
DOES ACTUAL NETWORK SATISFY POLICY WHEN TEMPORARY UPDATE COMMAND SEQUENCE IS EXECUTED?
$Goal_r(C) = true$
NO / YES

S01
ADD CANDIDATE COMMAND TO TEMPORARY UPDATE COMMAND SEQUENCE C (NEW NODE IS CREATED)

LOOP CANDIDATE COMMANDS ACQUIRED FROM CANDIDATE COMMAND GENERATION UNIT ONE BY ONE

S02
REMOVE END OF TEMPORARY UPDATE COMMAND SEQUENCE C (RETURN TO HIGHER NODE)

F1 / F1
DOES REACHABLE RANGE OF SIMULATOR EXPAND WHEN CANDIDATE COMMAND IS ADDED TO TEMPORARY UPDATE COMMAND SEQUENCE?
YES / NO

S03
OUTPUT TEMPORARY UPDATE COMMAND SEQUENCE C

IS CANDIDATE COMMAND LEFT?
YES / NO

END

EP 4 141 678 B1

22

Fig. 10

[10]

START

F0
DOES SIMULATOR SATISFY POLICY
WHEN TEMPORARY UPDATE COMMAND
SEQUENCE IS EXECUTED?
$Goal_{s}(C) = true$

YES    NO

F2
DOES ACTUAL NETWORK SATISFY
POLICY WHEN TEMPORARY UPDATE
COMMAND SEQUENCE IS EXECUTED?
$Goal_{r}(C) = true$

NO

YES

S03
OUTPUT TEMPORARY UPDATE
COMMAND SEQUENCE C

END

S01
ADD CANDIDATE COMMAND TO
TEMPORARY UPDATE COMMAND
SEQUENCE C (NEW NODE IS CREATED)

LOOP CANDIDATE COMMANDS
ACQUIRED FROM CANDIDATE COMMAND
GENERATION UNIT ONE BY ONE

F1
DOES REACHABLE RANGE OF SIMULATOR
EXPAND WHEN CANDIDATE COMMAND IS ADDED
TO TEMPORARY UPDATE COMMAND SEQUENCE?

YES

NO

S02
REMOVE END OF TEMPORARY UPDATE
COMMAND SEQUENCE C
(RETURN TO HIGHER NODE)

F3
(STOCHASTICALLY EXECUTED)
DOES ACTUAL NETWORK HAVE
LARGER REACHABLE RANGE?

YES

NO

S04
SEARCH FOR CURRENT NODE
AND SUBSEQUENT NODES IN
ONLY ACTUAL NETWORK

S05
HAS UPDATE COMMAND
SEQUENCE SATISFYING POLICY
BEEN FOUND?

NO

YES

IS CANDIDATE COMMAND LEFT?

YES

NO

EP 4 141 678 B1

**EP 4 141 678 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005165919 A1

**Non-patent literature cited in the description**

- Automatically repairing network control planes using an abstract representation. **A. GEMBER-JACOB-SON** ; **A. AKELLA** ; **R. MAHAJAN** ; **H. H. LIU**. Proceedings of the 26th Symposium on Operating Systems Principles, ser. SOSP '17. New York, NY, USA. ACM, 2017, 359-373